**Europäisches Patentamt**

**European Patent Office**

**Office européen des brevets**

(11) Veröffentlichungsnummer: **0 111 276**
**A1**

(12) # EUROPÄISCHE PATENTANMELDUNG

(21) Anmeldenummer: 83112144.7

(22) Anmeldetag: 02.12.83

(51) Int. Cl.³: **G 01 K 7/22**

(30) Priorität: 10.12.82 DE 3245777

(43) Veröffentlichungstag der Anmeldung:
20.06.84 Patentblatt 84/25

(84) Benannte Vertragsstaaten:
AT BE CH DE FR GB IT LI NL

(71) Anmelder: Degussa Aktiengesellschaft
Weissfrauenstrasse 9
D-6000 Frankfurt am Main 1(DE)

(72) Erfinder: Hammer, Gottfried, Dr.
Grünaustrasse 13
D-6450 Hanau 9(DE)

(72) Erfinder: Wolf, Walter
Alsfelder Strasse 2
D-6057 Dietzenbach(DE)

(72) Erfinder: Ringelstein, Martin
Inheidenerstrasse 22
D-6000 Frankfurt/M. 60(DE)

(54) **Vorrichtung zur Überwachung der Temperatur auf grösseren Flächen.**

(57) Zur Überwachung von Temperaturen auf größeren Flächen werden sogenannte Flächentemperaturwächter verwendet, bestehend aus einem langen, biegsamen, metallischen Schutzrohr, in dem ein oder mehrere Drähte in einer halbleitenden Substanz eingebettet sind. Als halbleitende Substanz verwendete man bisher vorzugsweise Nickeloxid, das toxisch und hygroskopisch ist. Diese Nachteile werden nunmehr durch Verwendung von $Cr_2O_3$ vermieden, dem 0 - 90 Vol.% eines elektrisch nichtleitenden Stoffes zugemischt sein können. Dadurch wird auch der Temperaturbereich erweitert, in dem der Flächentemperaturwächter eingesetzt werden kann.

EP 0 111 276 A1

D e g u s s a   Aktiengesellschaft

6000 Frankfurt am Main, Weissfrauenstraße 9


Vorrichtung zur Überwachung der Temperatur
auf größeren Flächen
_____


Die Erfindung betrifft eine Vorrichtung zur Überwachung
der Temperatur auf größeren Flächen, bestehend aus einem
langen, biegsamen, metallischen Schutzrohr, in dem sich ein
oder mehrere Drähte befinden, welche ohne sich oder das
Schutzrohr zu berühren auf der ganzen Länge des Schutzrohres in eine halbleitende Substanz eingebettet sind.

Solche als Flächentemperaturwächter bezeichnete Vorrichtungen werden als Temperaturfühler zur einfachen und
kostengünstigen Temperaturüberwachung mit hoher Zuverlässigkeit an großflächigen bzw. langgestreckten Konstruktionen verwendet, z.B. für Wandflächen von chemischen
Großapparaturen, Öfen, Silos, Containern, Kühlräumen,
Rohrleitungen oder Kabelschächten. Die üblichen Überwachungstemperaturen für derartige Meßsysteme liegen im
Bereich von +100 bis +500 $^{\circ}$C.

Diese Flächentemperaturwächter bestehen meist aus einem
langen, biegsamen, metallischen Schutzrohr, in welchem
ein oder mehrere Metalldrähte so angeordnet sind, daß
sich weder die Metalldrähte gegenseitig noch das Schutzrohr berühren. Der verbleibende Raum zwischen den Drähten
und dem Schutzrohr ist mit einer halbleitenden Substanz
mit negativem Temperatur-Koeffizienten angefüllt (DE-PS 17 73 577).

Als Ausgangssignal für die Temperaturmessung dient der temperaturabhängige elektrische Widerstand der Halbleitersubstanz, der zwischen den Drähten bzw. zwischen Draht und Schutzrohr gemessen wird. Im Gegensatz zum Thermoelement, bei dem nur eine punktförmige Temperaturmessung an der Verbindungsstelle der beiden Thermoschenkel möglich ist, besitzt der Flächentemperaturwächter aufgrund seines Aufbaus über seine gesamte Länge die Fähigkeit, Temperaturänderungen festzustellen und entsprechend anzuzeigen.

Auch bei einer örtlich eng begrenzten und verhältnismäßig geringen Temperaturerhöhung an einer beliebigen Stelle des Schutzrohres nimmt der elektrische Widerstand zwischen den Drähten bzw. zwischen Draht und Schutzrohr - entsprechend der hohen negativen Temperatur-Koeffizienten des elektrischen Widerstandes der Halbleitersubstanz - stark ab und kann von einem an den Enden des Flächentemperaturwächters angeschlossenen Meßglied registriert bzw. optisch oder akustisch angezeigt werden.

Bei dem in der DE-PS 1 773 577 beschriebenen Flächentemperaturwächter bestehen Drähte und Schutzrohr aus Nickel oder einer nickelreichen Legierung, die Halbleitersubstanz aus Nickeloxid. Die genannten Materialien besitzen jedoch eine Reihe von Nachteilen, die sich negativ auf die Fertigungs- und Gebrauchseigenschaften dieser Flächentemperaturwächter auswirken.

Nickeloxid ist toxisch, so daß für die Herstellung der Flächentemperaturwächter Sicherheitsmaßnahmen vorgesehen werden müssen, die im allgemeinen kostenaufwendig sind und die ferner die Handhabung mit halbfertigen Produkten komplizieren. Für den Anwender treten daneben Entsorgungsprobleme nach dem Auswechseln schadhaft gewordener Flächentemperaturwächter auf. Weiterhin ist Nickeloxid stark hygroskopisch. Bereits geringste Feuchtigkeitsspuren im NiO führen infolge einer drastischen Widerstandsverringerung zur Unbrauchbarkeit solcher Flächentemperaturwächter. Die NiO-Präparation und seine Verarbeitung zum Flächentemperaturwächter muß daher nach entsprechend aufwendigen Arbeitsbedingungen erfolgen, die Feuchtigkeitsausschluß garantieren. Durch mechanische oder korrosive Beschädigungen des Schutzrohres oder der Drahtdurchführungen, die im Betriebseinsatz häufig zu beobachten sind, wird der NiO-Flächentemperaturwächter durch die sofort einsetzende Feuchtigkeitsaufnahme des NiO ebenfalls unbrauchbar. Außerdem neigen Flächentemperaturwächter mit NiO-Füllung im Langzeiteinsatz von z.B. mehreren Jahren dazu, zu niedrigeren Widerstandswerten abzudriften. Diesem Umstand muß durch Nacheichen der Meßanordnung in gewissen Abständen Rechnung getragen werden, um Auslösung von Blindalarm oder unerwünschter Abschaltung der zu überwachenden Einrichtungen zu vermeiden. Flächentemperaturwächter gemäß DE-PS 1 773 577 können darüberhinaus nur in einem relativ engen Temperaturbereich eingesetzt werden.

Es war daher Aufgabe der vorliegenden Erfindung, eine Vorrichtung zur Überwachung der Temperatur auf größeren Flächen zu schaffen, bestehend aus einem langen, biegsamen, metallischen Schutzrohr, in dem sich ein oder mehrere Drähte befinden, welche ohne sich oder das Schutzrohr zu berühren auf der ganzen Länge des Schutzrohres in eine halbleitende Substanz eingebettet sind. Dabei sollte die halbleitende Substanz weder toxisch noch hygroskopisch und die Vorrichtung in einem weiten Temperaturbereich einsetzbar sein.

Diese Aufgabe wurde erfindungsgemäß dadurch gelöst, daß die halbleitende Substanz aus Chromoxid $(Cr_2O_3)$ besteht.

Als vorteilhaft hat es sich dabei erwiesen, bis zu 90 Vol.% des Chromoxids durch elektrisch nichtleitende keramische Stoffe, wie Oxide, Carbide oder Nitride, zu ersetzen. Am besten bewährt haben sich Gemische aus Chromoxid $(Cr_2O_3)$ mit 5 bis 90 Vol.% Magnesiumoxid und/oder Aluminiumoxid.

Chromoxid $(Cr_2O_3)$ ist nicht toxisch, praktisch nicht hygroskopisch und ein Langzeitdriften des elektrischen Widerstandes konnte nach einer gewissen Stabilisierungs- oder Alterungsphase von 4 - 6 Wochen nicht beobachtet werden.

Abbildung II zeigt die Widerstands-Temperatur-Abhängig- keit eines mit $Cr_2O_3$ gefüllten Flächentemperaturwächters von 1 m Länge. Aus dem Kennlinienverlauf ist ersichtlich, daß ein solcher Fühler für Meß- und Überwachungsaufgaben im Temperaturbereich von ca. -100 $^{o}$C bis ca. +150 $^{o}$C optimal verwendbar ist.

Durch Einsatz von Mischungen aus $Cr_2O_3$ und elektrisch nichtleitenden keramischen Stoffen als Halbleiterfüllung kann der Arbeitstemperaturbereich des Flächentemperaturwächters je nach Art und Menge der nichtleitenden Zusätze bis zu einer maximalen Temperatur von +600 $^{o}$C erweitert werden. Hierbei sind alle Mischungsanteile von 0 bis ca.

90 Vol.% möglich. Mit steigendem Anteil an elektrisch nichtleitenden keramischen Stoffen erhöht sich der Widerstand des Flächentemperaturwächters und damit auch der Arbeitstemperaturbereich. Als elektrisch nichtleitende Stoffe kommen sämtliche Materialien in Betracht, deren spezifische Widerstände bei 500 $^\circ$C größer $10^4$ $\Omega$ · cm sind und die bis zur verwendeten Einsatztemperatur nicht aufschmelzen bzw. sich nicht chemisch verändern.

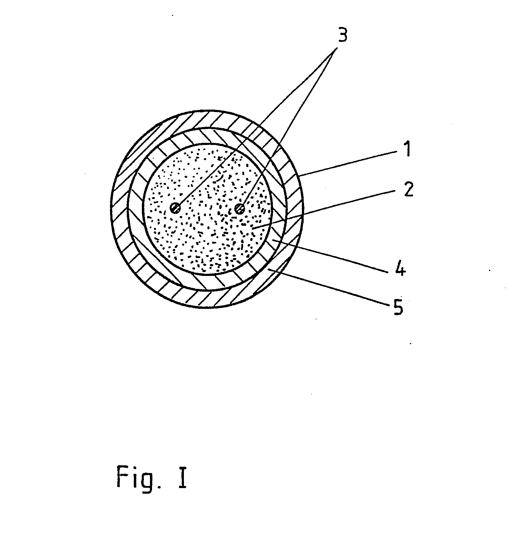

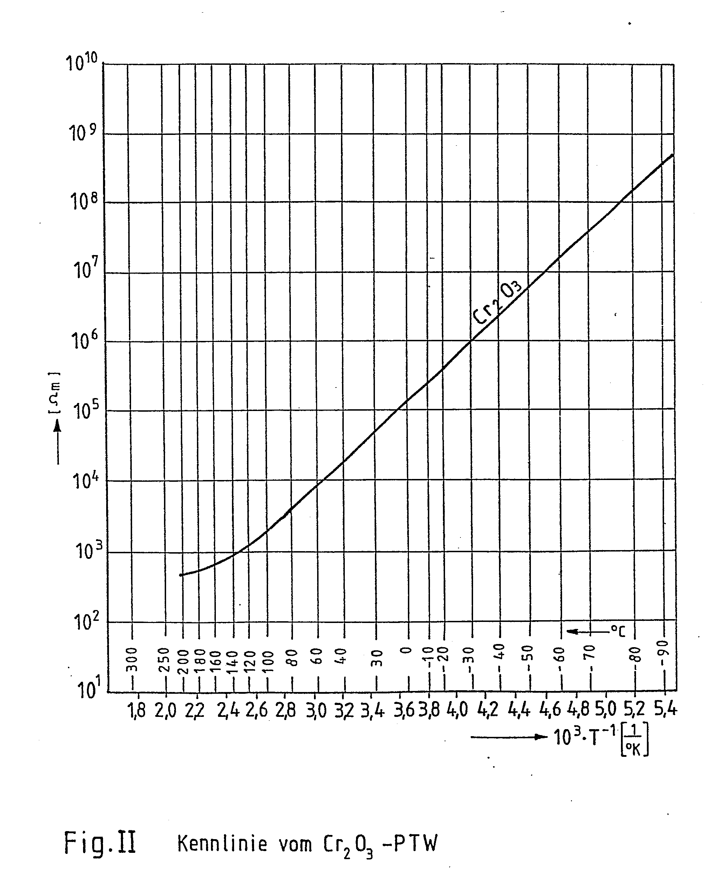

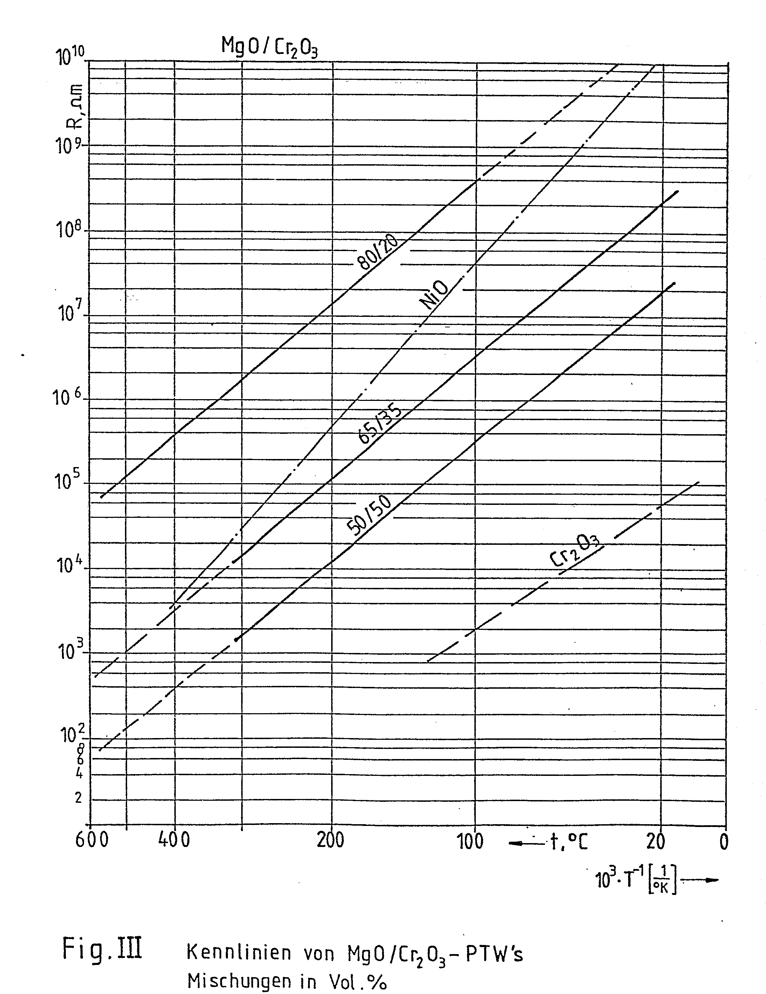

Die Abbildung II zeigt die Widerstands-Temperatur-Kennlinie des Flächentemperaturwächters mit reinem $Cr_2O_3$ als Halbleiterfüllung. In Abbildung III werden als Beispiel für eine Mischung aus $Cr_2O_3$ und einem elektrisch nichtleitenden Stoff die Kennlinien für Flächentemperaturwächter mit $MgO/Cr_2O_3$-Füllungen 50/50 bis 80/20 Vol.% dargestellt. Aus beiden Diagrammen ist ersichtlich, daß der reine $Cr_2O_3$-Flächentemperaturwächter beispielsweise für einen Temperaturbereich von -100 bis +150 $^\circ$C gut geeignet ist, und der mit einer Mischung $MgO/Cr_2O_3$ = 80/20 gefüllte Flächentemperaturwächter bevorzugt für einen Arbeitsbereich von +100 bis +600 $^\circ$C einzusetzen ist. Gewünschte dazwischenliegende Arbeitstemperaturbereiche können durch entsprechend frei variierbare Mischungsverhältnisse eingestellt werden.

Die Abbildung I zeigt schematisch eine erfindungsgemäße Vorrichtung zur Überwachung der Temperatur auf größeren Flächen in beispielhafter Ausführungsform. Sie besteht aus einem Schutzrohr (1), in dem sich eine halbleitende Substanz (2) befindet, in die zwei Drähte (3) eingebettet sind. Das Schutzrohr (1) ist vorteilhafterweise aus zwei Schichten aufgebaut, wobei sich für den Innenmantel (4) Reinnickel und für den Außenmantel (5) ein korrosionsbeständiger Stahl bewährt hat.

0111276

82 215 ET

D e g u s s a   Aktiengesellschaft

6000 Frankfurt am Main, Weissfrauenstraße 9

Patentansprüche:

1. Vorrichtung zur Überwachung der Temperatur auf größeren Flächen, bestehend aus einem langen, biegsamen, metallischen Schutzrohr, im dem sich ein oder mehrere Drähte befinden, welche ohne sich oder das Schutzrohr zu berühren auf der ganzen Länge des Schutzrohres in eine halbleitende Substanz eingebettet sind, dadurch gekennzeichnet, daß die halbleitende Substanz aus Chromoxid ($Cr_2O_3$) besteht.

2. Vorrichtung zur Überwachung der Temperatur nach Anspruch 1, dadurch gekennzeichnet, daß 0 bis 90 Vol.% des Chromoxids durch elektrisch nichtleitende keramische Stoffe ersetzt sind.

3. Vorrichtung zur Überwachung der Temperatur nach Anspruch 1 und 2, dadurch gekennzeichnet, daß die halbleitende Substanz aus Gemischen von Chromoxid ($Cr_2O_3$) mit 5 bis 90 Vol.% Magnesiumoxid (MgO) und/ oder Aluminiumoxid ($Al_2O_3$) besteht.

4. Vorrichtung zur Überwachung der Temperatur nach Anspruch 1 bis 3, <u>dadurch gekennzeichnet</u>, daß das Schutzrohr (1) aus zwei Metallschichten (4,5) besteht.

5. Vorrichtung zur Überwachung der Temperatur nach Anspruch 1 bis 4, <u>dadurch gekennzeichnet</u>, daß der Innenmantel (4) des Schutzrohres (1) aus Reinnickel und der Außenmantel (5) aus einem korrosionsbeständigen Stahl besteht.

Fig. I

Fig.II    Kennlinie vom Cr₂O₃ –PTW

Fig. III   Kennlinien von MgO/Cr$_2$O$_3$ – PTW's
Mischungen in Vol.%

Europäisches
Patentamt

**EUROPÄISCHER RECHERCHENBERICHT**

EP 83 11 2144

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-2 740 874 (KELLY et al.) * Figuren 1,2; Spalte 1, Zeile 22 - Spalte 3, Zeile 39 * | 1 | G 01 K 7/22 |
| D,A | DE-B-1 773 577 (DEUTSCHE GOLD- UND SILBER-SCHEIDEANSTALT VORMALS ROESSLER) * Figuren 1,2; Spalte 1, Zeile 25 - Spalte 2, Zeile 63; Spalte 3, Zeile 17 - Spalte 4, Zeile 2 * | 1,5 | |
| A | US-A-3 845 706 (STRIMPLE et al.) * Figuren 5,6; Spalte 2, Zeile 56 - Spalte 4, Zeile 51; Spalte 5, Zeilen 23-30 * | 2,3 | |
| A | US-A-3 958 209 (SODA et al.) * Figur 3; Spalte 2, Zeile 54 - Spalte 4, Zeile 28; Spalten 9,10; Tabelle 1 * | 2,3 | RECHERCHIERTE SACHGEBIETE (Int. Cl. ³) G 01 K 7/00 G 01 K 1/00 G 08 B 17/00 H 01 C 7/00 |
| A | US-A-3 329 534 (ADLER et al.) * Figur 2; Spalte 2, Zeilen 25-50 * | 4 | |
| A | FR-A-1 342 670 (CIBA S.A.) * Figur 1; Seite 1, linke Spalte, Zeile 30 - rechte Spalte, Zeile 33 * | 4 | |

Der vorliegende Recherchenbericht wurde für alle Patentansprüche erstellt.

| Recherchenort | Abschlußdatum der Recherche | Prüfer |
|---|---|---|
| DEN HAAG | 16-03-1984 | DRYSDALE N. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503. 03.82